# EUROPÄISCHE PATENTSCHRIFT

(11) **EP 3 211 784 B1**
(45) Veröffentlichungstag und Bekanntmachung des Hinweises auf die Patenterteilung: **31.03.2021**
(21) Anmeldenummer: 16157275.5
(22) Anmeldetag: 25.02.2016
(51) Int. Cl.: H02M 7/483

(54) **DOPPEL-SUBMODUL FÜR EINEN MODULAREN MEHRPUNKTSTROMRICHTER UND MODULARER MEHRPUNKTSTROMRICHTER MIT DIESEM**
DOUBLE SUBMODULE FOR A MODULAR MULTILEVEL CONVERTER AND MODULAR MULTILEVEL CONVERTER COMPRISING SAME
SOUS-MODULE DOUBLE POUR UN CONVERTISSEUR DE FRÉQUENCE MULTIPOINTS MODULAIRE ET CONVERTISSEUR DE FRÉQUENCE MULTIPOINTS MODULAIRE EN ÉTANT DOTE

(43) Veröffentlichungstag der Anmeldung: 30.08.2017
(73) Patentinhaber: GE Energy Power Conversion Technology Ltd, Rugby Warwickshire CV21 1BU (GB)
(72) Erfinder: JANNING, Jörg, 12277 Berlin (DE); GESKE, Martin, 12277 Berlin (DE)
(74) Vertreter: Rüger Abel Patentanwälte PartGmbB

(56) Entgegenhaltungen:
- EP-A2- 2 432 109
- DE-A1- 10 103 031

## Beschreibung

Die vorliegende Erfindung betrifft ein Doppel-Submodul für einen modularen Mehrpunktstromrichter und einen modularen Mehrpunktstromrichter mit einer Reihenschaltung derartiger Doppel-Submodule.

Stromrichter zur Umwandlung von Gleichstrom in Wechselstrom und umgekehrt werden für viele Anwendungen, wie bspw. zur Kopplung elektrischer Netze mit drehzahlvariablen Antrieben, zum Energieaustausch zwischen zwei elektrischen Netzen und dgl. verwendet. Hierzu sind Stromrichter in unterschiedlichen Schaltungstopologien und Konfigurationen bekannt. Für kleinere und mittlere Leistungen sind konventionelle Stromrichter in Zweipunkttechnik bekannt, die einfache und robuste Lösungen bieten und weit verbreitet sind.

Mit fortwährender Entwicklung von Leistungshalbleiterschaltern und Anwendungsmöglichkeiten von Leistungselektronik werden stets neuere Stromrichtertopologien für immer höhere Leistungs- und Spannungsbereiche gewünscht und entwickelt. Im Mittel- und Hochspannungsbereich werden häufig sog. Mehrpunktstromrichter eingesetzt, um mehrere Spannungsstufen zu erzeugen und die Spannungen auf höhere Niveaus bis in Bereiche der Hochspannungsgleichstromübertragung (HGÜ) zu erhöhen, wobei eine hinreichende Spannungsqualität bei hoher Stufenzahl zu erreichen ist.

Eine zunehmend verbreitete Stromrichtertopologie stellt der modulare Mehrpunktstromrichter (Modular Multilevel Converter, MMC bzw. M2C) dar. Dieser Stromrichter weist Phasenzweige bzw. -module auf, die aus zwei in Reihe miteinander verbundenen Stromrichterzweigen bestehen, wobei jeder Stromrichterzweig aus einer Anzahl gleichartiger Zellen (Submodulen) aufgebaut ist. Jedes Submodul ist durch eine Brückenschaltung mit ansteuerbaren Leistungshalbleiterschaltern und einem internen Kondensator zur Zwischenspeicherung elektrischer Energie gebildet. Die Brückenschaltung kann eine Halbbrücke mit zwei in Reihe verbundenen ansteuerbaren Leistungshalbleiterschaltern oder auch eine H- bzw. Vollbrücke sein, die zwei parallele Brückenzweige aufweist, in denen jeweils zwei Leistungshalbleiterschalter in Reihe zueinander angeordnet sind. Zu jedem ansteuerbaren Schalter ist eine Freilaufdiode antiparallel geschaltet. Durch die modulare Bauweise ist der Stromrichter für unterschiedliche Leistungen und Anwendungen individuell skalierbar. Die Spannungen und Ströme auf der Wechselspannungs(AC)-Seite und der Gleichspannungs(DC)-Seite können hochdynamisch und weitgehend entkoppelt voneinander gesteuert und geregelt werden.

Ein derartiger modularer Mehrpunktstromrichter ist bspw. aus der DE 101 03 031 A1 bekannt, wobei die Submodule nach Art einer Halbbrücke ausgebildet sind. Jedes Submodul weist also lediglich zwei in Reihe zueinander geschaltete Leistungshalbleiterschalter, die so mit einem Kondensator als Energiespeicher des jeweiligen Submoduls verschaltet sind, dass eine unipolare Spannung, entweder die positive Kondensatorspannung oder eine Nullspannung, an den beiden Anschlussklemmen des Submoduls abfällt. Diese Schaltung ist relativ kostengünstig und zeichnet sich durch geringe Leitungsverluste aus.

Es sind auch modulare Mehrpunktstromrichter mit Submodulen in Form von Voll- oder H-Brücken bekannt. Die Verwendung von Voll- bzw. H-Brücken ermöglicht eine Invertierung der an dem Kondensator abfallenden Spannung an den Submodulklemmen. Erkauft wird dies aber mit einer höheren Anzahl von Leistungshalbleiterschaltern und dadurch einem erhöhten Schaltungsaufwand und erhöhten Kosten für den Stromrichter insgesamt. Außerdem sind bei solchen vollbrückenbasierten Submodulen stets zwei Schalter stromdurchflossen, wodurch die Leitungsverluste gegenüber halbbrückenbasierten Submodulen deutlich erhöht sind. Für Anwendungen im Mittel- und Hochspannungsbereich können derartige Leitungsverluste inakzeptabel sein.

Ein wesentlicher Aspekt ist auch die Robustheit des Stromrichters im Falle eines Kurzschlusses im Gleichspannungszwischenkreis. Tritt in dem Gleichspannungszwischenkreis ein Kurzschluss auf, der durch ein Wechselspannungsnetz gespeist wird, können sehr hohe Kurzschlussströme durch die Stromrichterzweige fließen. Bei der Verwendung von Halbbrücken als Submodule fließen diese Kurzschlussströme durch die Freilaufdioden, die zu den jeweiligen Leistungshalbleiterschaltern antiparallel geschaltet sind. Die Freilaufdioden müssen folglich relativ stark dimensioniert sein, um derartige transiente Kurzschlussströme auszuhalten, bevor diese erkannt werden und der Stromrichter durch Öffnung des Leistungsschalters auf der Wechselstromseite oder durch Trennung eines DC-Schalters von dem Gleichspannungszwischenkreis getrennt wird. Insofern müssen auch relativ hohe Grenzlastintegral-Anforderungen an die verwendeten Dioden gestellt werden. Das Grenzlastintegral, auch als i²t-Wert bezeichnet, ist ein Kriterium für die Kurzzeitüberlastbarkeit eines Halbleiterbauelementes, bspw. einer Diode. Es gibt den zulässigen Höchstwert an, der innerhalb einer bestimmten Zeitdauer anstehen darf, ohne dass es zur Überschreitung der zulässigen Sperrschicht-Temperatur und somit zur Zerstörung des Bauteils kommt. Das Grenzlastintegral wird durch Integration des Quadratwerts des Stroms über die Zeit für eine bestimmte Zeitdauer bestimmt. Das Grenzlastintegral der verwendeten Dioden muss über dem entsprechenden Grenzlastintegral einer Sicherung liegen, die zum Abschalten des Stromrichters im Kurzschlussfalle verwendet wird.

Es ist bekannt, spezielle Kurzschlussschutzeinrichtungen für die Dioden bzw. Freilaufdioden in den Submodulen von modularen Mehrpunktstromrichtern vorzusehen. Bspw. sieht die WO 2008/110129 A1 Thyristoren vor, die parallel zu den Freilaufdioden der Halbbrücken in den Submodulen angeordnet und im Kurzschlussfalle gezündet werden, um einen Teil des durch die jeweilige Freilaufdiode fließenden Kurzschlussstroms zu übernehmen. Dies erhöht aber die Komplexität und die Kosten der Submodulschaltung und für deren Betrieb.

Angesichts der unterschiedlichen Einsatzmöglichkeiten und Anforderungen werden stets neuere Konfigurationen von Submodulen für modulare Mehrpunktstromrichter mit dem Ziel entwickelt, die Anzahl der Zellen, die Anzahl der Leistungshalbleiterschalter und die Leitungsverluste zu reduzieren und die Robustheit des Stromrichters im Kurzschlussfalle zu erhöhen.

Eine Übersicht von modularen Mehrpunktstromrichtern mit unterschiedlichen Submodulkonfigurationen, einschließlich Vollbrücken-, gekreuzten Konfigurationen, gemischten Zellen, asymmetrischen Zellen, etc., kann bspw. in Alireza Nami, et al.: "Modular Multilevel Converters for HVDC Applications: Review on Converter Cells and Functionalities", in IEEE Transactions on Power Electronics, Vol. 30, No. 1, Januar 2015, Seiten 18-36 gefunden werden. Die Verwendung von Vollbrücken führt zu einer relativ hohen Anzahl von Leistungshalbleiterschaltern und erhöhten Leitungsverlusten im Betrieb.

EP 2 432 109 A2 beschreibt ein Submodul in der Konfiguration einer asymmetrischen H-Brückenschaltung und einen modularen Mehrpunktstromrichter mit derartigen Submodulen. Das Submodul weist eine erste Serienschaltung bestehend aus einem ersten steuerbaren Leistungshalbleiterbauelement und einer ersten Diode und eine zweite Serienschaltung bestehend aus einer zweiten Diode und einem zweiten steuerbaren Leistungshalbleiterbauelement auf. Die erste Serienschaltung, die zweite Serienschaltung und ein Kondensator sind zueinander parallel geschaltet. Der Verbindungspunkt des ersten Leistungshalbleiterbauelements mit der ersten Diode bildet einen ersten Ausgangsanschluss, und der Verbindungspunkt der zweiten Diode mit dem zweiten Leistungshalbleiterbauelement bildet einen zweiten Ausgangsanschluss des Submoduls. Der modulare Mehrpunktstromrichter weist pro Phasenzweig mehrere derartige Submodule auf, die über deren erste und zweite Ausgangsanschlüsse in Reihe miteinander verbunden sind. Ein zweiter Ausgangsanschluss eines ersten Submoduls in der Reihenschaltung der Submodule ist mit dem Pluspol einer Zwischenkreisgleichspannung verbunden, während ein erster Ausgangsanschluss eines letzten Submoduls in der Reihenschaltung der Submodule mit dem Minuspol der Zwischenkreisgleichspannung verbunden ist und der Verbindungspunkt zwischen den innersten Submodulen in jeder Reihe zu einem Wechselspannungs-Phasenanschluss des Stromrichters herausgeführt ist.

Kalle Ilves, et al.: "A Submodule Implementation for Parallel Connection of Capacitors in Modular Multilevel Converters", in Power Electronics and Applications (EPE), 2013 15th European Conference on, Seiten 1-10, beschreibt ein Doppel-Submodul, das zwei parallel verbundene Vollbrücken aufweist. Es sind zwei Vollbrückenschaltungen über deren jeweilige Wechselspannungsanschlüsse miteinander verbunden, während ein erster Gleichspannungsanschluss einer ersten Vollbrücke und ein zweiter Gleichspannungsanschluss der zweiten Vollbrücke die beiden Gleichspannungsklemmen des Doppel-Submoduls bilden. Das Doppel-Submodul kann vorteilhafterweise zur direkten AC-AC-Umwandlung verwendet werden. Es weist aber doppelt so viele Leistungshalbleiterschalter wie zwei in Reihe verbundene halbbrückenbasierte Submodule auf. Bei Doppelsubmodulen, die durch bestimmte Schaltzustände eine Parallelschaltung beider Zwischenkreiskondensatoren herbeiführen, können voneinander abweichende Spannungen der Kondensatoren zu teilweise großen Ausgleichströmen und zu dementsprechend höheren Verlusten innerhalb der Submodule führen.

Es besteht weiterhin ein Bedarf nach neuen Submodulkonfigurationen für modulare Mehrpunktstromrichter, die die Vorteile der halbbrückenbasierten Submodule, einschließlich einer geringen Anzahl von Leistungshalbleiterschaltern und geringen Leitungsverlusten, bieten, während sie gleichzeitig eine hohe Kurzschlussfestigkeit ermöglichen. Weiterhin wäre es von Vorteil, einen mechanischen Grundaufbau für mehrere Sub-Modulvarianten verwenden zu können. Bisher erfordern bspw. halbbrückenbasierte Submodule einen anderen mechanischen Grundaufbau als vollbrückenbasierte Submodule.

Es ist deshalb eine Aufgabe der Erfindung, ein Submodul zur Verwendung in einem modularen Mehrpunktstromrichter zu schaffen, das eine ähnliche Spannungs- und Stromcharakteristik wie halbbrückenbasierte Submodule aufweist, relativ unaufwendig und kostengünstig aufgebaut ist, insbesondere eine geringe Anzahl von Leistungshalbleiterschaltern benötigt, und sich durch geringe Leitungsverluste im Betrieb auszeichnet. Vorzugsweise kann das Submodul mit einem mechanischen Grundaufbau anderer bestehender Submodularten eingesetzt werden.

Eine weitere Aufgabe der Erfindung ist es, einen modularen Mehrpunktstromrichter mit einer Anzahl derartiger Submodule zu schaffen, der bei einfachem Aufbau mit relativ geringen Kosten implementiert und betrieben werden kann.

Diese Aufgabe wird durch ein Doppel-Submodul mit den Merkmalen des unabhängigen Anspruchs 1 und durch einen modularen Mehrpunktstromrichter mit den Merkmalen des unabhängigen Anspruchs 10 gelöst. Besonders vorteilhafte Ausführungsformen der Erfindung sind Gegenstand der Unteransprüche.

Gemäß einem Aspekt der Erfindung ist ein Doppel-Submodul für einen modularen Mehrpunktstromrichter geschaffen, wobei das Doppel-Submodul zwei miteinander verbundene Submodule aufweist. Jedes Submodul weist eine asymmetrische H-Brückenschaltung mit zwei parallelen Brückenzweigen, die zwischen einem ersten und einem zweiten Polanschluss des Submoduls angeschlossen sind, und einen Kondensator auf. Jeder Brückenzweig ist durch eine Reihenschaltung aus einem Leistungshalbleiterschalter und einer Diode gebildet, wobei dem Leistungshalbleiterschalter eine antiparallel geschaltete Freilaufdiode zugeordnet ist. Der Kondensator ist parallel zu der asymmetrischen H-Brückenschaltung zwischen dem ersten und dem zweiten Polanschluss des Submoduls angeschlossen. Ein Verbindungspunkt zwischen einem Leistungshalbleiterschalter und einer Diode jedes Brückenzweigs eines der Submodule ist mit jeweils einem Verbindungspunkt zwischen einem Leistungshalbleiterschalter und einer Diode eines Brückenzweigs des anderen Submoduls direkt verbunden, um das Doppel-Submodul zu bilden.

Somit sind erfindungsgemäß zwei asymmetrische H-Brückenschaltungen über ihre Wechselspannungs(AC)-Anschlüsse parallel miteinander verbunden, um das Doppel-Submodul zu bilden. Das Doppel-Submodul weist die gleiche Anzahl von Leistungshalbleiterschaltern wie zwei in Reihe verbundene Halbbrücken-Submodule auf, die das Doppel-Submodul funktionsmäßig ersetzen kann. Das Doppel-Submodul weist auch eine Spannungs- und Stromcharakteristik auf, die denjenigen von Halbbrücken-Submodulen entsprechen. Es kann eine unipolare Ausgangsspannung erzeugen und einen bipolaren Strom führen. Im Betrieb kann sichergestellt werden, dass stets maximal ein Leistungshalbleiterschalter pro Brücke des Doppel-Submoduls in dem Leitungspfad enthalten ist, so dass auch die Leitungsverluste maximal denjenigen von Submodulen auf Halbbrückenbasis entsprechen. Es kann auch in manchen Schaltzuständen der Leistungshalbleiterschalter erreicht werden, dass zwei Halbleiter je Submodul im Strompfad parallel den Strom führen, so dass in diesen Schaltzuständen in vorteilhafter Weise eine Verringerung der Leitungsverluste im Vergleich zu Submodulen auf Basis von Halbbrücken, bei denen der gesamte Strom durch eine einzige Freilaufdiode fließt, bewirkt werden kann. Diese Schaltzustände bei dem Doppel-Submodul verbessern auch die Kurzschlussfestigkeit eines Stromrichters, weil das Grenzlastintegral der Freilaufdioden in den parallelen Strompfaden gemeinsam genutzt werden kann. Im Vergleich zu einem Doppel-Submodul auf Vollbrückenbasis sind die Anzahl von Leistungshalbleiterschaltern in der Schaltung und die Leitungsverluste wenigstens um den Faktor 2 reduziert. Das Doppel-Submodul weist einen einfachen und kostengünstigen Aufbau auf. Seine Konfiguration schafft auch eine Basis dafür, dass bestehende mechanische Grundaufbauten, die z.B. für Submodule auf Basis von Vollbrücken oder asymmetrischen Vollbrücken verwendet werden, ohne große Modifikationen auch für das Doppel-Submodul genutzt werden können.

In Ausführungsformen kann ein erster, z.B. negativerer Polanschluss eines der Submodule eine erste Ein-/Ausgangsklemme des Doppel-Submoduls bilden, während ein zweiter, bspw. positiverer Polanschluss des anderen Submoduls eine zweite Ein-/Ausgangsklemme des Doppel-Submoduls bilden kann.

Die Kondensatoren der Brückenschaltungen können unipolare Kondensatoren sein. Bei Ansteuerung der Leistungshalbleiterschalter kann eine Spannung zwischen der ersten und der zweiten Ein-/Ausgangsklemme erzeugt werden oder anfallen, die entweder eine Null-Spannung, eine Spannung, die der positiven Spannung eines der Kondensatoren entspricht, oder eine Spannung ist, die der Summe der positiven Spannungen der Kondensatoren entspricht.

Wie bereits erwähnt, kann das Doppel-Submodul derart eingerichtet sein, dass bei der Übertragung eines Stroms zwischen der ersten und der zweiten Ein-/Ausgangsklemme des Doppel-Submoduls in jede beliebige Richtung in jedem Submodul maximal nur ein einziger Leistungshalbleiter stromdurchflossen ist.

Vorzugsweise ist das Doppel-Submodul ferner dazu eingerichtet, in manchen Schaltzuständen, insbesondere wenn alle Leistungshalbleiterschalter ausgeschaltet sind, einen Strom zwischen der ersten und der zweiten Ein-/Ausgangsklemme des Doppel-Submoduls durch zwei parallele Strompfade zu übertragen, wobei jeder Strompfad zwei der Dioden bzw. Freilaufdioden, nämlich eine Diode bzw. Freilaufdiode in der ersten asymmetrischen H-Brückenschaltung und eine weitere in der zweiten asymmetrischen H-Brückenschaltung, enthält. Dieser Schaltzustand des Doppel-Submoduls kann auch im Falle eines Kurzschlusses im Gleichspannungszwischenkreis genutzt werden, wobei die Strombelastung dann auf die beiden parallelen Strompfade und die zugehörigen Dioden aufgeteilt wird. Die momentane transiente Kurzschlussstromstärke pro Diode ist reduziert, und die Grenzlastintegral (i²t)-Anforderungen an jede Diode bzw. Freilaufdiode können reduziert werden.

In einer bevorzugten Ausführungsform sind alle Dioden und Freilaufdioden jedes Submoduls in Durchlassrichtung von dem zweiten zu dem ersten Polanschluss jedes Submoduls ausgerichtet. In anderen Worten sind alle Dioden und Freilaufdioden in Durchlassrichtung von der ersten zu der zweiten Ein-/Ausgangsklemme des Doppel-Submoduls ausgerichtet.

Ferner sind die asymmetrischen H-Brückenzweige vorzugsweise derart gestaltet, dass die Dioden in den Brückenzweigen eines jeden Submoduls mit unterschiedlichen Anschlüssen des Submoduls direkt verbunden sind. D.h., die Dioden sind in jeder asymmetrischen H-Brückenschaltung diagonal zueinander angeordnet, so dass die Kathode einer Diode mit dem Pluspol des Submoduls verbunden ist, während die Anode der anderen Diode mit dem Minuspol des Submoduls verbunden ist.

Außerdem sind in der bevorzugten Ausführungsform die Submodule vorzugsweise derart miteinander elektrisch verbunden, dass stets eine Anode einer Diode in einem Brückenzweig eines der Submodule mit einer Kathode einer Diode in einem Brückenzweig des anderen Submoduls direkt verbunden ist. Anders gesagt, ist in dem Fall, dass die ansteuerbaren Leistungshalbleiterschalter des Doppel-Submoduls vorzugsweise durch IGBTs gebildet sind, ein Kollektor eines Leistungshalbleiterschalters in einem Brückenzweig eines der Submodule mit einem Emitter eines Leistungshalbleiterschalters in einem Brückenzweig des anderen Submoduls direkt verbunden.

Es ist verständlich, dass auch andere Bauarten von ansteuerbaren Leistungshalbleiterschaltern, wie bspw. IGCTs, MOSFETs, GTOs oder dgl., verwendet werden können.

Gemäß einem weiteren Aspekt der Erfindung ist ein modularer Mehrpunktstromrichter zur Umwandlung einer Wechselspannung in eine Gleichspannung oder umgekehrt geschaffen. Der modulare Mehrpunktstromrichter weist wenigstens einen Phasenzweig auf, der einen Wechselspannungsanschluss und wenigstens einen mit einem Gleichspannungszwischenkreis verbundenen Gleichspannungsanschluss aufweist, wobei zwischen jedem Gleichspannungsanschluss und jedem Wechselspannungsanschluss ein Stromrichterzweig ausgebildet ist und wobei in jedem der Stromrichterzweige wenigstens ein erfindungsgemäßes Doppel-Submodul nach einer beliebigen der vorstehend beschriebenen Ausführungsformen angeordnet ist. Die Vorteile des Doppel-Submoduls, insbesondere der einfache und kostengünstige Aufbau, die Möglichkeit, bestehende mechanische Grundaufbauten von Submodulen auf Basis von Vollbrücken oder asymmetrischen Vollbrücken auch für das Doppel-Submodul einsetzen zu können, die geringe Anzahl von Leistungshalbleiterschaltern in der Schaltung, die geringe Anzahl von in Reihe geschalteten, stromdurchflossenen Leistungshalbleiterschaltern im Leitungspfad im Betrieb und die damit verbundenen geringen Leitungsverluste, die Möglichkeit, den Strom und insbesondere einen Kurzschlussstrom durch zwei parallele Strompfade mit jeweiligen Dioden bzw. Freilaufdioden zu führen und dadurch die Robustheit des Doppel-Submoduls in Bezug auf seine Kurzschlussfestigkeit zu erhöhen bzw. die i²t-Anforderungen an die Dioden und Freilaufdioden zu reduzieren, kommen auch dem modularen Mehrpunktstromrichter zugute.

Der modulare Mehrpunktstromrichter kann eine beliebige Anzahl von Phasenzweigen aufweisen, die der gewünschten Anzahl von Phasen entspricht. Im Allgemeinen sind drei Phasenzweige vorgesehen. Je nach Anwendung kann auch ein einziger Phasenzweig ausreichen, oder es können zwei oder mehr als drei Phasen benötigt sein. Der modulare Mehrpunktstromrichter weist vorzugsweise einen ersten Gleichspannungsanschluss, der mit einem ersten, z.B. positiven Pol des Gleichspannungszwischenkreises verbunden sein kann, und einen zweiten Gleichspannungsanschluss auf, der mit einem zweiten, z.B. negativen oder negativeren Pol des Gleichspannungszwischenkreises verbunden sein kann. In jedem Stromrichterzweig des Stromrichters ist vorzugsweise die gleiche Anzahl von Doppel-Submodulen, vorzugsweise jeweils zwei oder mehrere in Reihe verbundene Doppel-Submodule, angeordnet. Prinzipiell können sich aber die Stromrichterzweige hinsichtlich der Anzahl der Doppel-Submodule voneinander unterscheiden.

Es kann eine Steuereinrichtung zur Steuerung des Betriebs des modularen Mehrpunktstromrichters vorgesehen sein, die dazu eingerichtet ist, die Leistungshalbleiterschalter nach einem vorgegebenen Muster derart anzusteuern, dass eine ein- oder mehrphasige Wechselspannung an einem Wechselspannungsanschluss des Stromrichters in eine Gleichspannung an dem Gleichspannungszwischenkreis oder umgekehrt umgewandelt wird. Insbesondere kann die Steuereinrichtung die Leistungshalbleiterschalter derart ansteuern, dass stets eine unipolare Klemmenspannung über den Doppel-Submodulen abfällt und ein bipolarer Strom durch jeden Stromrichterzweig übertragen werden kann. Der modulare Mehrpunktstromrichter ist so für viele unterschiedliche Anwendungen, wie z.B. zur Hochspannungsgleichstrom(HGÜ)-Leistungsübertragung, für große Leistungsantriebe, wie bspw. für Pumpspeicherkraftwerke, für Mittelspannungsantriebe, für Umrichteranlagen zur Bahnstromversorgung, zur Mittelspannungsgleichstromübertragung (MGÜ), bspw. für Photovoltaik- und Windkraftanlagen, und dgl. geeignet. Die Doppel-Submodule gemäß der Erfindung können die üblicherweise in modularen Mehrpunktstromrichtern verwendeten halbbrückenbasierten Submodule bei weiter reduzierten Leitungsverlusten, verbesserter Kurzschlussfestigkeit und reduzierten i²t-Anforderungen an die Halbleiterbauelemente ersetzen. Vorteilhafterweise kann der modulare mechanische Grundaufbau, der z.B. für vollbrückenbasierte Submodule verwendet wird, prinzipiell relativ einfach auch für das Doppel-Submodul genutzt werden.

In einer bevorzugten Ausführungsform kann die Steuereinrichtung dazu eingerichtet sein, einen Kurzschluss in dem Gleichspannungszwischenkreis zu erkennen und daraufhin alle Leistungshalbleiterschalter aller Doppel-Submodule in dem Kurzschlusspfad auszuschalten, um einen Kurzschlussstrom über parallele Strompfade in jedem Doppel-Submodul zu führen, wobei jeder Strompfad zwei in Reihe verbundene Dioden des Doppel-Submoduls aufweist. Die Belastung der Dioden mit dem Kurzschlussstrom ist um Faktor 2 reduziert, und die i²t-Auslegung der Dioden kann entsprechend, im Idealfall bis auf ein Viertel reduziert werden. Kurzschlussschutzeinrichtungen für die Dioden bzw. Freilaufdioden werden aufgrund der erfindungsgemäßen Topologie nicht benötigt.

Weitere vorteilhafte Einzelheiten von Ausführungsformen der Erfindung ergeben sich aus den Unteransprüchen, der Zeichnung sowie der zugehörigen Beschreibung. Die Erfindung ist nachstehend anhand einer Zeichnung näher beschrieben, die beispielhafte, keinesfalls beschränkende Ausführungsformen der Erfindung zeigt, wobei gleiche Bezugszeichen in allen Figuren verwendet werden, um gleiche Elemente zu bezeichnen. Es zeigen:
Fig. 1 ein beispielhaftes System mit einem modularen Mehrpunktstromrichter zur Kopplung eines elektrischen Energieversorgungsnetzes, einer elektrischen Maschine oder einer anderen Wechselspannungsquelle mit einem anderen Netz oder einer Last zur Verdeutlichung einer beispielhaften Anwendung der Erfindung, in Form eines vereinfachten Blockdiagramms;
Fig. 2 einen Schaltplan eines auf asymmetrischen H-Brückenschaltungen basierenden Doppel-Submoduls, das in dem modularen Mehrpunktstromrichter nach Fig. 1 gemäß der Erfindung verwendet werden kann;
Fig. 3 eine Tabelle, die bevorzugt verwendete Schaltzustände des Doppel-Submoduls nach Fig. 2 mit den resultierenden Ausgangsspannungen veranschaulicht;
Fig. 4 eine Darstellung der Ausgangsspannungscharakteristik Uₐ[pU] normiert, bezogen auf die maximal erreichbare Ausgangsspannung, für das Doppel-Submodul nach Fig. 2;
Fig. 5 einen Schaltplan des Doppel-Submoduls nach Fig. 2 unter Veranschaulichung eines Stromflusses in eine erste Richtung bei bestimmten Schaltzuständen des Doppel-Submoduls;
Fig. 6 einen Schaltplan des Doppel-Submoduls nach Fig. 2 unter Veranschaulichung von Schaltzuständen mit einer gegenüber Fig. 5 entgegengesetzten Stromflussrichtung;
Fig. 7 einen Schaltplan des Doppel-Submoduls nach Fig. 2 unter Veranschaulichung eines weiteren Schaltzustands des Doppel-Submoduls und der resultierenden Strompfade; und
Fig. 8 eine beispielhafte Strom-Spannungs-Kennlinie im Durchlassbereich einer Diode zur Verwendung in der Schaltungsanordnung des Doppel-Submoduls nach Fig. 2 zur Veranschaulichung einer Reduktion von Leitungsverlusten durch die Schaffung paralleler Strompfade.

Es wird nun auf Ausführungsformen der Erfindung Bezug genommen, die in den Zeichnungen veranschaulicht sind. Es sollte verständlich sein, dass die in den Zeichnungen veranschaulichten Ausführungsformen lediglich beispielhaft sind und die Erfindung als solche nicht beschränken. Vielmehr sind die Ausführungsformen lediglich dazu gedacht, mögliche Ausführungsformen zu erläutern und den Fachmann zu befähigen, die Erfindung auszuführen. Es sollte ferner verständlich sein, dass in dem Bemühen, eine konzise Beschreibung möglicher Ausführungsformen zu liefern, gegebenenfalls nicht alle von dem Umfang der Erfindung umfassten Einzelheiten angegeben sein können.

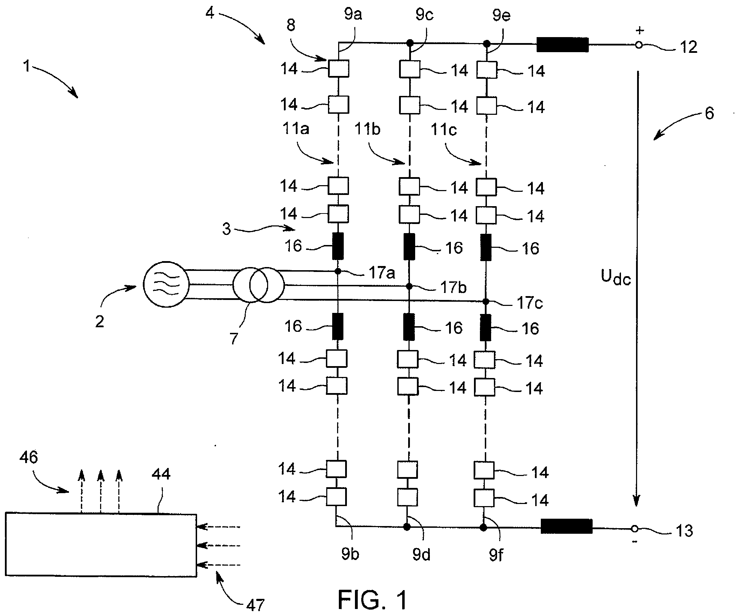

In Fig. 1 ist in einer stark vereinfachten Darstellung ein System 1 veranschaulicht, das bspw. ein Hoch- oder Mittelspannungsgleichstrom-Verteilungssystem zur elektrischen Energieübertragung bei hoher bzw. mittlerer Gleichspannung darstellen kann. Ein solches System könnte bspw. zur Kopplung von Gleichspannungsanwendungen an Wechselstromnetze wie Photovoltaik- oder Sammelschienensysteme mit Gleichspannung bzw. Gleichspannungsnetze verwendet werden. Ferner, kann ein solches System auch als sog. Back-to-Back System ausgeführt sein, bei dem die Gleichspannungsseite 6 mit einem elektrischen Stromrichter ähnlich dem Umrichter 4 direkt verbunden sein kann. Eine solche Anordnung ist vorzugsweise für eine Kopplung von Anwendungen oder elektrischen Netzen mit Wechselspannung mit einem Wechselspannungsnetz, wie bspw. für Pumpspeicherkraftwerke unter Verwendung von Generatoren, Windkraftanlagen oder zum Antrieb elektrischer Maschinen, wie Pumpen und Kompressoren, als auch zur Kopplung elektrischer Wechselspannungsnetze einsetzbar. Zur Übertragung von elektrischer Energie können die Stromrichter auf der Gleichspannungsseite 6 auch indirekt über eine Gleichspannungsübertragungseinrichtung verbunden sein. Das System 1 umfasst eine hier bspw. dreiphasige Wechselspannungsquelle 2, die z.B. ein elektrisches Energieversorgungsnetz, eine elektrische Wechselstrom(AC)-Maschine, ein AC-Generator, eine Windkraftanlage oder dgl. sein kann. An die Wechselspannungsquelle 2 ist mit seiner Wechselspannungsseite 3 ein elektrischer Umrichter 4 angeschlossen, dessen Gleichspannungsseite 6 bspw. über eine hier nicht näher dargestellte Gleichstromübertragungseinrichtung mit einem anderen elektrischen Energieversorgungsnetz oder elektrischem Stromrichter ähnlich dem Umrichter 4 verbunden sein kann. Der Anschluss des Umrichters 4 an die Wechselspannungsquelle 2 kann optional über einen Transformator 7 erfolgen. Darüber hinaus ist es ebenfalls denkbar, dass zwei oder mehrere Gleichspannungsnetze mit unterschiedlicher Spannung durch Stromrichter ähnlich dem Umrichter 4 über einen Transformator 7, der im Mittelfrequenzbereich betrieben wird, gekoppelt werden können. Diese Ausführung ermöglicht eine galvanisch getrennte Kopplung von Gleichspannungsnetzen, wobei ein Transformator 7, durch den Betrieb im Mittelfrequenzbereich, so ausgeführt sein kann, dass er ein erheblich geringeres Bauvolumen bzw. einer erheblich reduzierte Baugröße besitzt.

Der Umrichter 4 weist wenigstens einen ersten Stromrichter 8 auf, der hier als Gleichrichter betrieben sein kann, um eine Wechselspannung U_{ac} der Wechselspannungsquelle 2 in eine ausgangsseitige Gleichspannung U_{dc} zu wandeln. Optional könnte der Umrichter 4 einen hier nicht dargestellten weiteren Stromrichter aufweisen, der die Spannung U_{dc} in eine passende Wechselspannung wandelt. Der Stromrichter 8 könnte umgekehrt als Wechselrichter eingesetzt werden, um die Gleichspannung U_{dc} in eine Wechselspannung zur Einspeisung in das Wechselspannungsnetz 2 umzuwandeln. Es versteht sich, dass sich die Funktion des bzw. der Stromrichter umkehrt, wenn der Energiefluss zu dem Energieversorgungsnetz oder der Spannungssenke 2 hin erfolgt.

Wie aus Fig. 1 ersichtlich, weist der Stromrichter hier sechs Stromrichterzweige 9a-9f auf, von denen jeweils zwei, ein oberer und ein unterer 9a, 9b bzw. 9c, 9d bzw. 9e, 9f einen jeweiligen Phasenzweig 11a, 11b bzw. 11c bilden. Jeder Phasenzweig 11a, 11b, 11c erstreckt sich zwischen einer positiven Stromschiene bzw. einem positiven Gleichspannungsanschluss ("+") 12 des Stromrichters 8 und einer negativen Stromschiene bzw. einem negativen Gleichspannungsanschluss ("-") 13.

Wie ferner aus Fig. 1 ersichtlich, weist jeder Stromrichterzweig hier eine Reihenschaltung aus mehreren in Reihe geschalteten Stromrichter-Submodulen oder modularen Schaltern 14 auf. Die steuerbare Gleichspannung U_{dc} an den Gleichspannungsanschlüssen 12, 13 des Stromrichters 8 kann über die Schaltzustände der einzelnen Stromrichter-Submodule 14 dynamisch verändert werden. Die Anzahl der Stromrichter-Submodule 14 bestimmt dabei die verfügbare Anzahl von Stromrichter-Schaltzuständen, die eine feine Spannungsstufung und eine Spannungsform hoher Güte sowie hohe Spannungsniveaus bis in den Bereich der Hochspannungs-Gleichstrom-Übertragungs(HGÜ) ermöglichen. Bei dem Stromrichter 8 handelt es sich somit um einen modularen MultiLevel- oder Mehrpunktstromrichter, der auch als MMC oder M2C bezeichnet wird.

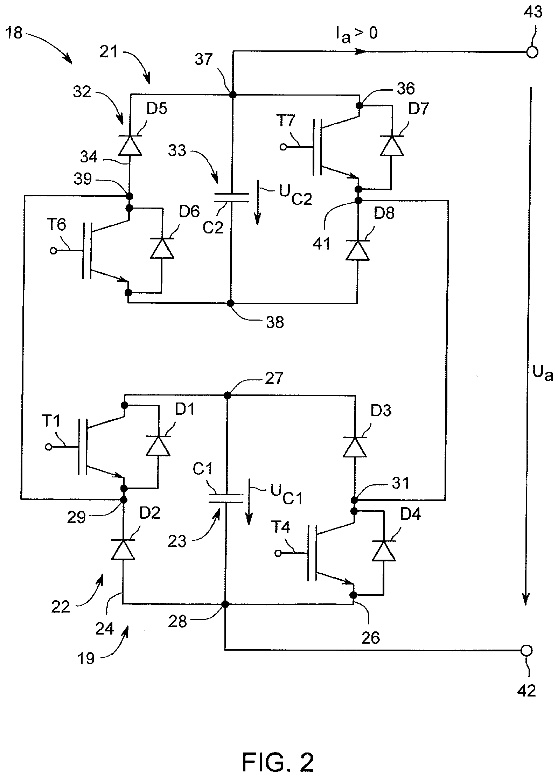

In der Technik sind unterschiedliche Konfigurationen für die Submodule 14 bekannt, die sich für unterschiedliche Anwendungen eignen. Bspw. werden vorwiegend sog. Halbbrücken verwendet, die im Wesentlichen eine Reihenschaltung zweier Leistungshalbleiterschalter mit jeweils antiparallel geschalteter Freilaufdiode darstellen, wobei zu der Reihenschaltung ein Kondensator als Energiespeicher parallelgeschaltet ist. Es sind auch Submodulkonfigurationen in Form von Voll- oder H-Brückenschaltungen, asymmetrischen H-Brückenschaltungen oder gemischte Konfigurationen bekannt. Eine erfindungsgemäße Konfiguration eines Submoduls 14 zur Verwendung in dem Stromrichter 8 ist nachstehend im Zusammenhang mit Figur 2 näher erläutert.

In den Stromrichterzweigen 9a-9f können jeweils kreisstrombegrenzende Induktivitäten 16 vorgesehen sein, die eine Entkopplung der Stromrichterzweige voneinander unterstützen. An dem Verbindungspunkt zwischen den zugehörigen Stromrichterzweigen 9a, 9b bzw. 9c, 9d bzw. 9e, 9f sind die jeweiligen Wechselspannungsanschlüsse 17a, 17b, 17c des Stromrichters 8 herausgeführt, die mit der Wechselspannungsquelle 2 verbunden sind. Die gleichspannungsseitigen Anschlüsse der ersten obersten Submodule 14 des Stromrichters 8 sind miteinander und mit der positiven Stromschiene 12 verbunden. Ähnlich sind die gleichspannungsseitigen Anschlüsse der letzten, untersten Submodule 14 miteinander und mit dem negativen Gleichspannungsanschluss 13 verbunden. Zwischen den Stromschienen 12, 13 liegt die Gleichspannung U_{dc} des Gleichspannungszwischenkreises an, die eine Hochspannung von bspw. über 100 kV sein kann.

Fig. 2 zeigt in Form eines vereinfachten Schaltplans eine Topologie eines erfindungsgemäßen Doppel-Submoduls oder modularen Schalters 18, wie es bzw. er in dem modularen Mehrpunktstromrichter 8 nach Fig. 1 verwendet werden kann. Es sollte beachtet werden, dass das Doppel-Submodul 18 anstelle von zwei in Reihe geschalteten Halb-, Voll- oder H-Brücken oder sonstigen zwei Submodulen eingesetzt werden kann. Insofern kann gegebenenfalls für jeden Stromrichterzweig 9a-f nur die halbe Anzahl der Doppel-Submodule 18 gemäß der Erfindung im Vergleich zu der Anzahl herkömmlicher Submodule 14 erforderlich sein.

Bezugnehmend auf Fig. 2 weist das Doppel-Submodul 18 im Wesentlichen eine Parallelschaltung aus zwei Submodulen 19, 21 auf. Insbesondere weist ein erstes, in Fig. 2 unteres Submodul 19 eine Brückenschaltung 22 und einen zu der Brückenschaltung 22 parallel geschalteten Kondensator C1, 23 auf. Die Brückenschaltung 22 ist hier als sog. asymmetrische H-Brücke mit zwei parallelen Brückenzweigen 24, 26 ausgebildet, die zwischen einem ersten und einem zweiten Gleichspannungsknoten bzw. Polanschluss 27, 28 parallel zueinander angeschlossen sind. Der erste Brückenzweig 24 weist eine Reihenschaltung aus einem ersten Leistungshalbleiterschalter T1, dem eine antiparallele bzw. gegensinnig parallel geschaltete Freilaufdiode D1 zugeordnet ist, und einer Diode D2 auf. Die Freilaufdiode D1 dient dazu, bei geöffnetem Leistungshalbleiterschalter T1 Betriebsstrom zu führen und den zugehörigen Leistungshalbleiterschalter gegen unzulässige Über- bzw. Sperrspannungen zu schützen.

Die Freilaufdiode D1 und die zu dieser in Reihe geschaltete Diode D2 sind in Durchflussrichtung von dem zweiten, in Fig. 2 unteren Polanschluss 28 zu dem ersten, oberen Polanschluss 27 des ersten Submoduls 19 ausgerichtet. Ferner ist die Diode D2 mit ihrer Anode mit dem zweiten Polanschluss 28 und mit ihrer Kathode mit dem Emitter des hier als IGBT (Bipolartransistor mit isolierter Gate-Elektrode) ausgebildeten Leistungshalbleiterschalters T1 und mit der Anode der Freilaufdiode D1 verbunden. Der Verbindungspunkt zwischen der Einheit aus dem Leistungshalbleiterschalter T1 und der Freilaufdiode D1 und der Diode D2 ist hier mit 29 bezeichnet.

In ähnlicher Weise weist der zweite Brückenzweig 26 eine Reihenschaltung aus einer Diode D3 und einem Leistungshalbleiterschalter T4 auf, dem eine antiparallel geschaltete Freilaufdiode D4 zugeordnet ist. Wiederum sind die Diode D3 und die Freilaufdiode D4 in Durchflussrichtung von dem zweiten Polanschluss 28 zu dem ersten Polanschluss 27 des Submoduls 19 ausgerichtet. Allerdings ist hier die Diode D3 mit ihrer Kathode mit dem ersten Polanschluss 27 und mit ihrer Anode mit dem Kollektor des hier als ein IGBT ausgebildeten Leistungshalbleiterschalters T4 und mit der Kathode der Freilaufdiode D4 verbunden. Der Verbindungspunkt zwischen der Diode D3 und der Einheit aus dem Leistungshalbleiterschalter T4 und der Freilaufdiode D4 ist hier mit 31 bezeichnet. Die Dioden D2, D3 sind also in der Brückenschaltung 22 diagonal zueinander angeordnet, wie es auch die Leistungshalbleiterelementeinheiten T1, D1 und T4, D4 sind.

Der Kondensator C1 als Energiespeicher des unteren Submoduls 19 ist zwischen den Polanschlüssen 27, 28 angeschlossen. Insbesondere ist der Kondensator C1, 23 vorzugsweise ein unipolarer Kondensator, der als ein Gleichspannungszwischenkreiskondensator des Submoduls 19 dient.

Die Leistungshalbleiterschalter T1, T4 sind ansteuerbare Schalter, die, wie bereits erwähnt, hier vorzugsweise durch IGBTs gebildet sind. Prinzipiell könnten aber auch andere abschaltbare Transistoren, wie bspw. Feldeffekttransistoren, Gate-Turn-Off-Thyristoren (GTOs) oder andere vergleichbare elektronische Bauelemente eingesetzt werden.

Das zweite, in Fig. 2 obere Submodul 21 weist in ähnlicher Weise eine Brückenschaltung 32 und einen zu der Brückenschaltung 32 parallel geschalteten Kondensator C2, 33 auf. Die Brückenschaltung 32 ist hier ebenfalls als asymmetrische H-Brückenschaltung mit zwei parallelen Brückenzweigen 34, 36 ausgebildet, die zwischen einem ersten, in Fig. 2 oberen Gleichspannungsknoten bzw. Polanschluss 37 und einem zweiten, unteren Gleichspannungsnoten bzw. Polanschluss 38 des Submoduls 21 parallel zueinander angeschlossen sind. Der erste Brückenzweig 34 weist eine Reihenschaltung aus einer Diode D5 und einem Leistungshalbleiterschalter T6 auf, dem eine antiparallele bzw. gegensinnig parallel geschaltete Freilaufdiode D6 zugeordnet ist. Die Diode D5 und die Freilaufdiode D6 sind in Durchlassrichtung von dem zweiten Polanschluss 38 zu dem ersten Polanschluss 37 des Submoduls 21 ausgerichtet. Ferner ist die Kathode der Diode D5 mit dem ersten, oberen Polanschluss 37 verbunden, während die Anode der Diode D5 mit der Kathode der Freilaufdiode D6 und mit dem Kollektor des hier vorzugsweise ebenfalls als IGBT ausgebildeten Leistungshalbleiterschalters T6 verbunden ist. Der Verbindungspunkt zwischen der Diode D5 und der Einheit aus dem Leistungshalbleiterschalter T6 und der zugehörigen Freilaufdiode D6 ist in Fig. 2 mit 39 bezeichnet.

In ähnlicher Weise weist der zweite Brückenzweig 36 des zweiten Submoduls 21 eine Reihenschaltung aus einem vorzugsweise ebenfalls als IGBT ausgebildeten Leistungshalbleiterschalter T7, zu dem eine Freilaufdiode D7 antiparallel geschaltet ist, und einer Diode D8 auf. Die Diode D8 und die Freilaufdiode D7 sind ebenfalls in Durchlassrichtung von dem zweiten Polanschluss 38 zu dem ersten Polanschluss 37 des Submoduls 21 ausgerichtet. Die Diode D8 ist mit ihrer Anode mit dem zweiten Polanschluss 38 und mit ihrer Kathode mit dem Emitter des Leistungshalbleiterschalters T7 bzw. mit der Anode der Freilaufdiode D7 verbunden. Der Verbindungspunkt zwischen der Diode D8 und der Einheit aus dem Leistungshalbleiterschalter T7 und der Freilaufdiode D7 ist hier mit 41 bezeichnet.

Der Kondensator C2, 33 ist parallel zu den beiden Brückenzweigen 34, 36 zwischen den Polanschlüssen 37, 38 angeschlossen. Er ist vorzugsweise ein unipolarer Kondensator und dient als Gleichspannungszwischenkreiskondensator des Submoduls 21.

Wie ferner aus Fig. 2 ersichtlich, sind die beiden Submodule 19, 21 über ihre Verbindungspunkte 29, 31 bzw. 39, 41, die üblicherweise die Wechselspannungsanschlüsse derartiger asymmetrischer H-Brücken 22, 32 darstellen, parallel miteinander verbunden, um das Doppel-Submodul 18 zu bilden. Genauer gesagt, ist der Verbindungspunkt 29 des ersten Brückenzweigs 24 des ersten Submoduls 19 mit dem Verbindungspunkt 39 des ersten Brückenzweigs 34 des zweiten Submoduls 21 direkt elektrisch verbunden. In ähnlicher Weise ist der Verbindungspunkt 31 des zweiten Brückenzweigs 26 des ersten Submoduls 19 mit dem Verbindungspunkt 41 des zweiten Brückenzweigs 36 des zweiten Submoduls 21 direkt elektrisch verbunden.

Außerdem bildet der zweite, negativere Polanschluss 28 des ersten Submoduls 19 eine erste Ein-/Ausgangsklemme 42 des Doppel-Submoduls 18, während der erste, positivere Polanschluss 37 des zweiten Submoduls 21 eine zweite Ein-/Ausgangsklemme 43 des Doppel-Submoduls 18 bildet. Über die Ein-/Ausgangsklemmen 42, 43 können die Doppel-Submodule 18 der in Fig. 2 veranschaulichten Ausführungsform in Reihe miteinander verbunden werden, um einen modularen Mehrpunktstromrichter 8 der in Fig. 1 dargestellten Art mit beliebiger Anzahl von Stufen zu bilden.

Wie bereits erwähnt, sind die beiden Kondensatoren C1, 23 des ersten Submoduls 19 und C2, 33 des zweiten Submoduls 21 als Gleichspannungszwischenkreiskondensatoren vorgesehen. Die Gleichspannung U_{C1} bzw. U_{C2} an dem Kondensator C1, 23 bzw. C2, 33 ist aufgrund der Schaltung der Dioden D2, D3, D5, D8 und der Freilaufdioden D1, D4, D6, D7 stets positiv und kann je nach Bemessung und Anwendung bspw. zwischen einigen hundert Volt und einigen kV betragen. Die Anschlussspannung Uₐ zwischen der zweiten 43 und der ersten Ein-/Ausgangsklemme 42 kann im Wesentlichen die Werte 0, U_{C1}, U_{C2} oder U_{C1}+U_{C2} annehmen. Die Spannung U_{C1} bzw. U_{C2} an jedem Kondensator C1, 23 bzw. C2, 33 kann größer oder kleiner werden. Ein Strom Iₐ kann durch das Doppel-Submodul 18 in beide Richtungen, also von der zweiten Ein-/Ausgangsklemme 43 zu der ersten Ein-/Ausgangsklemme 42 oder umgekehrt fließen. Per Konvention soll hier ein Strom Iₐ, der von der ersten Ein-/Ausgangsklemme 42 durch das Doppel-Submodul 18 hindurch zu der zweiten Ein-/Ausgangsklemme 43 und aus dieser heraus nach außen fließt, als positiver Strom bezeichnet werden, während der umgekehrte Strom, der in die zweite Ein-/Ausgangsklemme 43 hinein, durch das Doppel-Submodul 18 hindurch bis zu der ersten Ein-/Ausgangsklemme 42 und aus dieser heraus nach außen fließt, als ein negativer Strom bezeichnet werden soll.

Erneut bezugnehmend auf Fig. 1 ist ferner eine Steuereinrichtung 44 ersichtlich, die dazu vorgesehen ist, auf der Basis der momentanen Betriebsbedingungen den Betrieb des Stromrichters 8 geeignet zu steuern. Die Steuerungspfade sind in Fig. 1 der Übersichtlichkeit wegen lediglich durch gestrichelte Pfeile 46 angedeutet, die aus der Steuereinrichtung 44 heraustreten. Insbesondere steuert die Steuereinrichtung 44 die Leistungshalbleiterschalter T1, T4, T6 und T7 der Doppel-Submodule 18 aller Stromrichterzweige 9a-f geeignet an, um aus der Netzspannung U_{ac} bzw. deren Transformierten an den Wechselspannungsanschlüssen 17a-c eine gewünschte Gleichspannung U_{dc} zwischen den Gleichspannungsanschlüssen 12, 13 des Stromrichters 8 zu erzeugen oder umgekehrt. Die hierzu geeigneten Schaltsignale werden von der Steuereinrichtung in Abhängigkeit von den aktuellen Betriebsbedingungen bzw. Parametern bestimmt, die von einer hier nicht näher dargestellten Überwachungseinrichtung im Betrieb laufend gemessen bzw. ermittelt werden. In Fig. 1 sind Messpfade durch gestrichelte Pfeile 47 angedeutet, die in die Steuereinrichtung 47 eintreten. Es können bspw. die Phasenspannungen und/oder die Phasenströme an den Wechselspannungsanschlüssen 17a-c, die Zweigströme in den Stromrichterzweigen 9a-f und/oder der Zwischenkreisstrom in dem Gleichspannungszwischenkreis, die Potentiale an den Gleichspannungsanschlüssen 12, 13 zur Erfassung der Gleichspannungszwischenkreisspannung U_{dc} und/oder andere Größen direkt erfasst oder gemessen werden. Manche Größen können aus erfassten Größen mit allgemein bekannten Beziehungen für elektrische Ströme und Spannungen bestimmt werden.

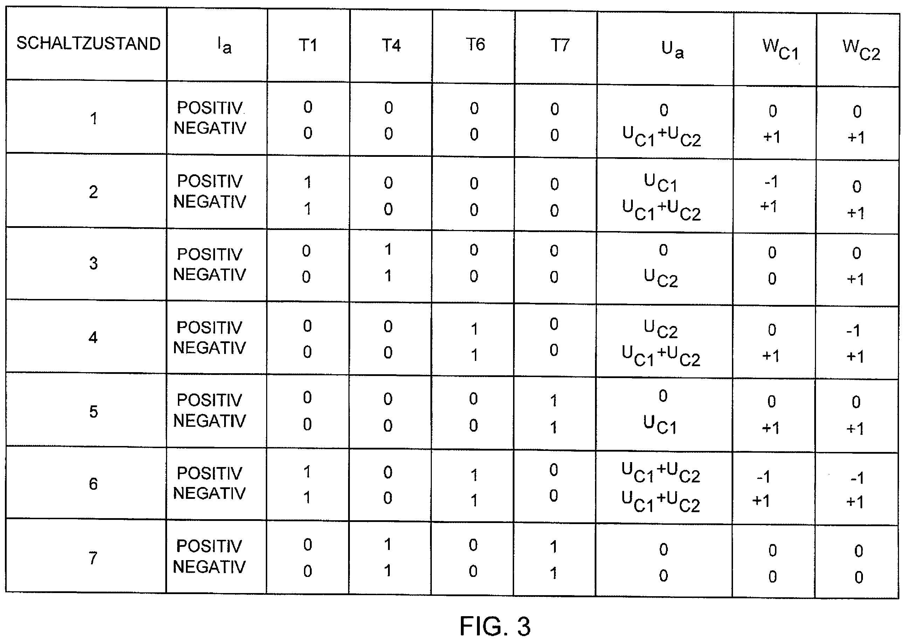

Zum weiteren Verständnis der Funktionsweise und vorteilhafter Effekte des modularen Mehrpunktstromrichters 8 und der Doppel-Submodule 8 gemäß der Erfindung wird nun auf die Figuren 3 bis 8 Bezug genommen. Fig. 3 zeigt eine Tabelle, die unterschiedliche Schaltzustände des Doppel-Submoduls 18 je nach Ansteuerung der Leistungshalbleiterschalter T1, T4, T6 und T7 sowohl für die positive als auch die negative Richtung des Stroms I durch das Doppel-Submodul 18 veranschaulicht. Eine 0 bei einem jeweiligen Schalter T1, T4, T6 bzw. T7 bedeutet, dass der Leistungshalbleiterschalter ausgeschaltet bzw. nichtleitend angesteuert ist, während eine 1 kennzeichnet, dass der Leistungshalbleiterschalter eingeschaltet bzw. leitend angesteuert ist.

Eingetragen ist ferner die Ausgangsspannung Uₐ, die sich zwischen der zweiten und der ersten Ein-/Ausgangsklemme 43, 42 des Doppel-Submoduls 18 bei dem jeweiligen Schaltzustand ergibt. Wie bereits erwähnt, kann die Spannung Uₐ die Werte 0, U_{C1}, U_{C2} bzw. U_{C1}+U_{C2} annehmen.

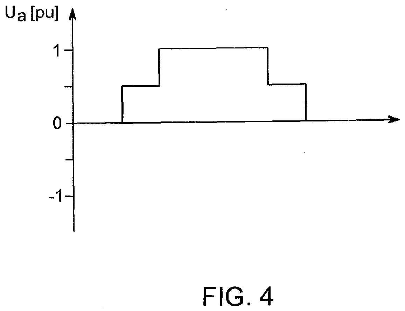

Die möglichen Ausgangsspannungen für das Doppel-Submodul 18 sind in Form einer vereinfachten Charakteristik Uₐ[pU], normiert (per Unit, pU) auf die maximal erreichbare Ausgangsspannung, in Fig. 4 dargestellt. Es ergibt sich eine unipolare Spannung, ähnlich wie bei halbbrückenbasierten Submodulen, aber mit drei Spannungsstufen. Ferner kann ein bipolarer Strom, also ein Strom in jede beliebige Richtung durch das Doppel-Submodul 18 geführt werden.

Eingetragen in der Tabelle nach Fig. 3 sind ferner zwei Spalten mit der Überschrift WC1 bzw. WC2, die den Energiefluss in den bzw. aus dem jeweiligen Kondensator C1, 23 bzw. C2, 33 veranschaulichen. Eine "+1" kennzeichnet, dass der jeweilige Kondensator Energie aufnimmt, indem er aufgeladen wird. Eine "-1" kennzeichnet, dass der jeweilige Kondensator entladen wird bzw. Energie abgibt. Eine "0" kennzeichnet, dass der Kondensator seine Energie im Wesentlichen beibehält, wobei der Stromfluss an ihm vorbei geführt wird. Wie daraus ersichtlich, kann durch die Wahl geeigneter Schaltzustände ein sogenanntes "Balanzieren" der Energieinhalte der Kondensatoren C1, C2 des Doppel-Submoduls bewirkt werden, um die Spannungen der Kondensatoren C1, C2 an einen entsprechenden Referenz- oder Mittelwert anzupassen und anzugleichen. Vorteilhafterweise gibt es ausreichend Schaltzustände, mit denen bei einer gewünschten Klemmenspannung Uₐ des Doppel-Submoduls 18 ein derartiges "Balanzieren" der Kondensatorspannung bzw. deren Energieinhalte erfolgen kann.

Im Übrigen bietet das Doppel-Submodul 18 darüber hinaus redundante Schaltzustände, mit denen die jeweils gewünschte Klemmenspannung Uₐ erzielt werden kann. Bspw. kann, wie auch aus Fig. 3 ersichtlich, eine Nullspannung bei positivem Strom erzielt werden, wenn alle Leistungshalbleiterschalter T1, T4, T6, T7 ausgeschaltet sind, wobei der Schalter T4 und/oder der Schalter T7 auch eingeschaltet sein kann bzw. können. Für die doppelte bzw. maximale Kondensatorspannung U_{C1}+U_{C2} können entweder alle Leistungshalbleiterschalter T1, T4, T6, T7 beim negativen Strom ausgeschaltet sein, oder es kann der Schalter T1 und/oder der Schalter T6 auch eingeschaltet sein. Ähnliches ist auch für eine Klemmenspannung Uₐ, die der einfachen Kondensatorspannung entspricht, festzustellen.

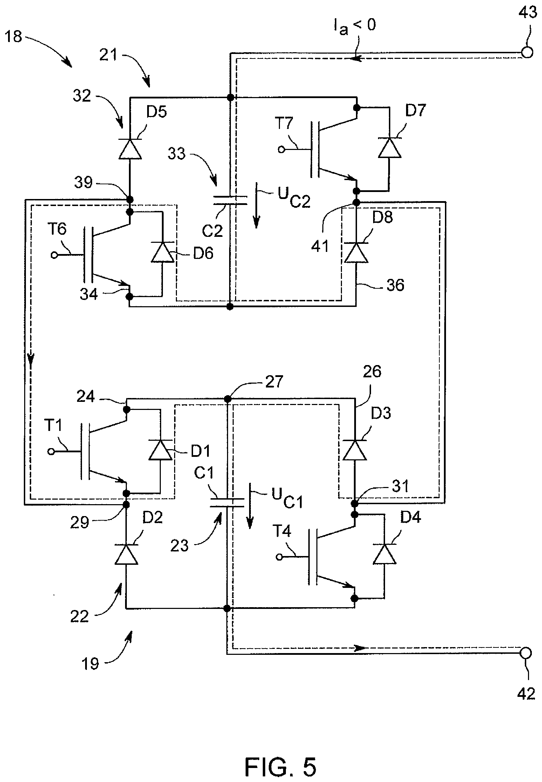

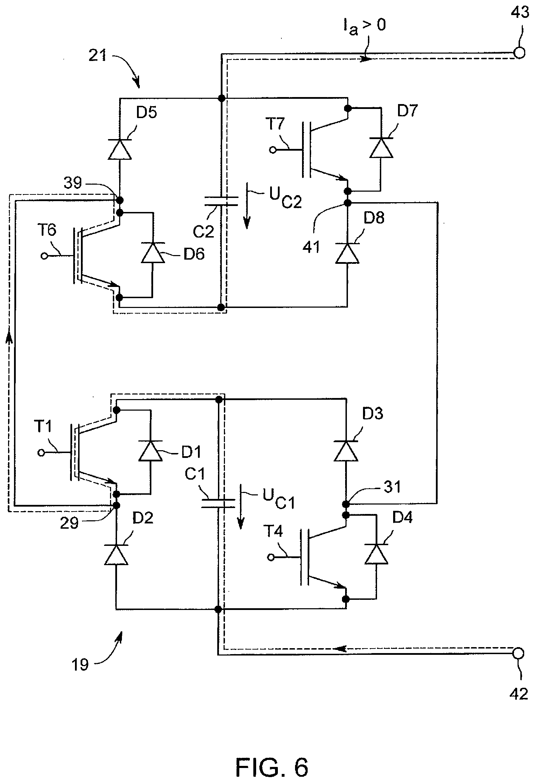

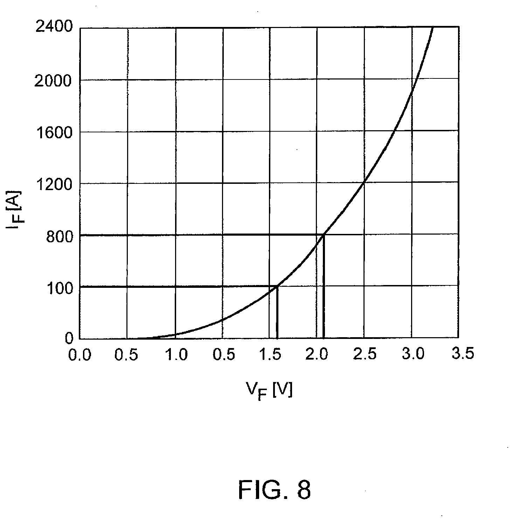

Figuren 5 und 6 zeigen die Schaltungsanordnung des Doppel-Submoduls 18 nach Fig. 2 unter Veranschaulichung der Stromflüsse durch das Doppel-Submodul 18, wenn zwischen den Klemmen 43, 42 die maximale Klemmenspannung Uₐ gleich U_{C1}+U_{C2} anliegt. In Fig. 5 ist der Strom Iₐ negativ, so dass der Strom ausgehend von der zweiten Klemme 43 in das Doppel-Submodul hinein fließt. Die Leistungshalbleiterschalter T7, T4 sind ausgeschaltet, während die Leistungshalbleiterschalter T6 und T1 wahlweise ein- oder ausgeschaltet sein können. Der Strom fließt von der zweiten Ein-/Ausgangsklemme 43 durch den Kondensator C2, 33 und teilt sich dann auf zwei Strompfade auf, von denen einer über die Freilaufdiode D6, die Verbindungspunkte 39, 29, die Freilaufdiode D1 bis zu dem Kondensator C1, 23 und der andere über die Diode D8, die Verbindungspunkte 41, 31, die Diode D3 bis zu dem Kondensator C1, 23 verläuft. Der Strom fließt dann durch den Kondensator C1 hindurch und über die erste Ein-/Ausgangsklemme 42 hinaus. Vorteilhafterweise teilt sich der Strom auf zwei Strompfade auf, so dass die Strombelastung der Dioden sinkt und diese bedarfsweise schwächer dimensioniert werden können oder deren Durchlassverluste entsprechend der Strom-Spannungskennlinie im Durchlassbereich kleiner werden und geringeren Bedarf zur Kühlung haben. Die Leitungsverluste sind dadurch noch weiter reduziert, sogar geringer als bei Submodulen auf Halbbrückenbasis, bei denen in entsprechenden Schaltzuständen nur ein einziger Strompfad mit einem einzigen Halbleiter, nämlich einer einzigen Freilaufdiode, den gesamten Strom führt, wie dies nachstehend im Zusammenhang mit Fig. 8 näher erläutert ist.

Fig. 6 zeigt den Fall, bei dem die Leistungshalbleiterschalter T1 und T6 eingeschaltet sind, während die Leistungshalbleiterschalter T4, T7 wahlweise ein- oder ausgeschaltet sein können, für den Fall eines Stromflusses in positiver Richtung und bei maximaler Klemmenspannung Uₐ zwischen den Klemmen 42, 43. Der Strom Iₐ fließt von der ersten Ausgangsklemme 42 durch den Kondensator C1, 23 hindurch, durch den eingeschalteten Leistungshalbleiterschalter T1, durch die Verbindung zwischen den Verbindungspunkten 29, 39, durch den Leistungshalbleiterschalter T6, durch den Kondensator C2, 33 hindurch und aus der zweiten Ein-/Ausgangsklemme 43 aus dem Doppel-Submodul 18 heraus. Vorteilhafterweise ist hier lediglich ein Leistungshalbleiterschalter T1 bzw. T6 in jedem der Submodule 19, 21 stromdurchflossen, was Submodulen auf Halbbrückenbasis entspricht. Die Leitungsverluste sind ähnlich wie oder sogar geringer als bei halbbrückenbasierten Submodulen, jedenfalls deutlich geringer als bei vollbrückenbasierten Submodulen, bei denen pro Submodul zwei Leistungshalbleiterschalter im Betrieb leitend geschaltet sind.

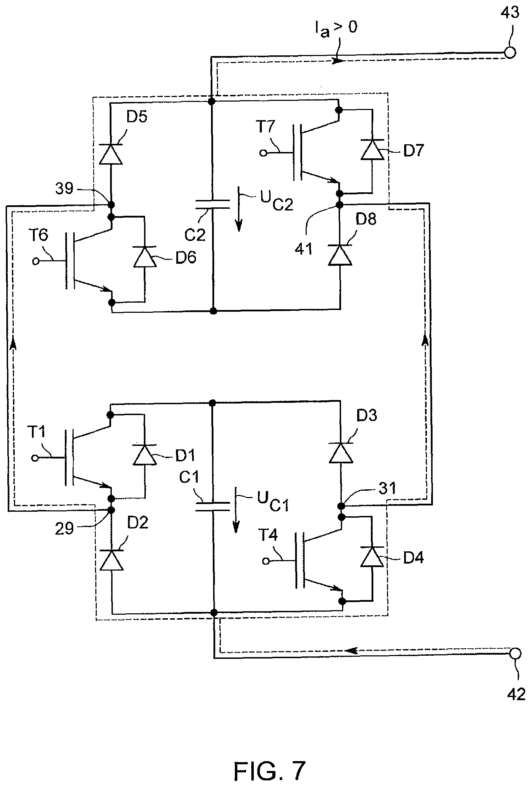

Fig. 7 zeigt einen sog. Bypass-Betriebsmodus mit einem positiven Strom, der von der ersten Ein-/Ausgangsklemme 42 des Doppel-Submoduls 18 durch das Doppel-Submodul 18 hindurch unter Umgehung aller Leistungshalbleiterschalter T1, T4, T6 und T7 zu der zweiten Ein-/Ausgangsklemme 43 und aus dieser nach außen herausfließt. Dieser Betriebsmodus ergibt sich, wenn die Leistungshalbleiterschalter T1 und T6 ausgeschaltet sind. Die Leistungshalbleiterschalter T7 und T4 können wahlweise ein- oder ausgeschaltet sein. Wie veranschaulicht, teilt sich der Strom wieder auf zwei parallele Strompfade auf, von denen der eine von der ersten Klemme 42 durch die Diode D2, über die Verbindung 29, 39, durch die Diode D5 zu der zweiten Klemme 43 führt, während der zweite Strompfad durch die Freilaufdiode D4, über die Verbindung 31, 41 und durch die Freilaufdiode D7 zu der zweiten Klemme 43 führt. Die Klemmenspannung Uₐ ist unter Vernachlässigung der Durchlassspannungen der Halbleiterbauelemente im Wesentlichen null.

Die parallelen Strompfade in den Schaltzuständen gemäß den Figuren 5 und 7 ergeben eine weitere Reduktion der Leitungsverluste im Betrieb. Unter Bezugnahme auf Fig. 8, die eine Strom-Spannungs-Kennlinie einer beispielhaften Diode zur Verwendung in dem Doppel-Submodul zeigt, ist ersichtlich, dass sich im leitenden Zustand einer Diode bei einem Strom von bspw. 800 A und einer zugehörigen Durchlassspannung von 2,1 V eine Verlustleistung von 1 x 800A x 2,1 V = 1680 W ergibt. Bei einer Aufteilung der Ströme auf zwei parallele Strompfade und zwei Halbleiterbauelemente, wie dies in den Schaltzuständen gemäß den Figuren 5 und 7 bspw. der Fall ist, fließt durch jede Diode nur der halbe Strom von 400 A, während die Durchlassspannung in etwa 1,6 Volt beträgt. Die ergibt bei zwei Dioden eine Verlustleistung von 2 x 400 A x 1,6 V = 1280W. Infolgedessen kann die Verlustleistung um bis zu ca. 400 W oder 25% reduziert werden. Insofern ermöglicht das erfindungsgemäße Doppel-Submodul 18 eine deutliche Reduktion der Leitungsverluste auch im Vergleich zu halbbrückenbasierten Submodulen.

Ein weiterer Vorteil des erfindungsgemäßen Doppel-Submoduls 18 ist eine erhöhte Kurzschlussstromfestigkeit für den Fall eines Kurzschlusses im Gleichspannungszwischenkreis. Wenn die Steuereinrichtung 44 einen Kurzschluss im Gleichspannungszwischenkreis bzw. auf der Gleichspannungsseite des Stromrichters 8 feststellt, steuert sie alle Leistungshalbleiterschalter T1, T4, T6 und T7 aller Submodule an, um sie auszuschalten. Ein von dem Wechselspannungsnetz gespeister Kurzschlussstrom fließt dann über jeweilige Stromrichterzweige 9a-f durch die Doppel-Submodule 18 hindurch. Bei ausgeschalteten Leistungshalbleiterschaltern der Doppel-Submodule 18 ergibt sich der in Fig. 7 veranschaulichte Stromweg auf einer Seite der Gleichspannungsanschlüsse (je nach Energieflussrichtung), bei dem der Strom auf zwei parallele Strompfade aufgeteilt ist. Somit werden zwei Leistungshalbleiterelemente D2, D4 bzw. D5, D7 in jedem Submodul 19, 21 nur mit dem halben Kurzschlussstrom belastet. Die Dioden können für kleinere Kurzschlussströme ausgelegt werden. Zusätzliche unter Umständen parallele Schutzelemente können entfallen. Insbesondere können die Anforderungen bezüglich des Grenzlastintegrals (i²t) der verwendeten Dioden und Freilaufdioden gegenüber halbbrückenbasierten Submodulen reduziert werden. Bei dem halben Kurzschlussstrom kann das entsprechende Grenzlastintegral für die Dioden deutlich, theoretisch bis auf ein Viertel, reduziert werden.

Somit ist ein Doppel-Submodul 18 geschaffen, das einen einfachen und kostengünstigen Aufbau aufweist, der auch die Basis zur Verwendung existierender mechanischer Konfigurationen für den Grundaufbau für z.B. Submodule auf Vollbrückenbasis erlaubt und dabei die Erzielung einer vorteilhaften Strom- und Spannungscharakterik eines halbbrückenbasierten Submoduls ermöglicht. Entsprechend ist auch eine einfache und kostengünstige Realisierung eines modularen Mehrpunktstromrichters für unterschiedliche Anwendungen ermöglicht. Die Leitungsverluste können sowohl gegenüber halbbrückenbasierten als auch gegenüber vollbrückenbasierten Submodulen reduziert werden. Die Anzahl der verwendeten Leistungshalbleiterschalter entspricht vorteilhafterweise derjenigen von halbbrückenbasierten Submodulen und beträgt nur die Hälfte derjenigen von vollbrückenbasierten Submodulen. Durch die Verwendung zusätzlicher Dioden in den asymmetrischen Brückenschaltungen 22, 32 des Doppel-Submoduls 18 können die Leitungsverluste in verschiedenen Schaltzuständen weiter reduziert und die Kurzschlussfestigkeit verbessert werden. Vorteilhafterweise können die erfindungsgemäßen Doppel-Submodule 18 auch in bestehenden Hardwareumgebungen von modularen Mehrpunktstromrichtern, die Submodule auf Vollbrückenbasis einsetzen, mit geringem Aufwand nachgerüstet werden.

Es ist ein Doppel-Submodul 18 für einen modularen Mehrpunktstromrichter 8 geschaffen, wobei das Doppel-Submodul 18 zwei miteinander verbundene Submodule 19, 21 aufweist, wobei jedes Submodul eine asymmetrische H-Brückenschaltung 22, 32 mit zwei parallelen Brückenzweigen 24, 26; 34, 36, die zwischen einem ersten und einem zweiten Polanschluss 27, 28; 37, 38 des Submoduls 19, 21 angeschlossen sind, wobei jeder Brückenzweig durch eine Reihenschaltung aus einem Leistungshalbleiterschalter T1, T4; T6, T7 und einer Diode D2, D3; D5, D8 gebildet ist, wobei dem Leistungshalbleiterschalter eine antiparallel geschaltete Freilaufdiode D1, D4; D6, D7 zugeordnet ist, und einen Kondensator 23; 33 aufweist, der parallel zu der asymmetrischen H-Brückenschaltung 22; 32 zwischen dem ersten und dem zweiten Polanschluss des Moduls angeschlossen ist. Die Submodule 19, 21 sind über deren Wechselspannungsanschlüsse 29, 31; 39, 41 miteinander verbunden, um das Doppel-Submodul 18 zu bilden. Ferner ist ein modularer Mehrpunktstromrichter 8 geschaffen, der eine Anzahl derartiger Doppel-Submodule 18 in jedem seiner Stromrichterzweige 9a-9f aufweist.

## Patentansprüche

1. Doppel-Submodul für einen modularen Mehrpunktstromrichter, wobei das Doppel-Submodul (18) zwei miteinander verbundene Submodule (19, 21) aufweist, wobei jedes Submodul (19, 21) aufweist:
eine asymmetrische H-Brückenschaltung (22; 32) mit zwei parallelen Brückenzweigen (24, 26; 34, 36), die zwischen einem ersten und einem zweiten Polanschluss (27, 28; 37, 38) des Submoduls (19, 21) angeschlossen sind, wobei jeder Brückenzweig (24, 26; 34, 36) durch eine Reihenschaltung aus einem Leistungshalbleiterschalter (T1, T4; T6, T7) und einer Diode (D2, D3; D5, D8) gebildet ist, wobei dem Leistungshalbleiterschalter (T1, T4; T6, T7) eine antiparallel geschaltete Freilaufdiode (D1, D4; D6, D7) zugeordnet ist; und
einen Kondensator (C1, 23; C2, 33), der parallel zu der asymmetrischen H-Brückenschaltung (22; 32) zwischen dem ersten und dem zweiten Polanschluss (27, 28; 37, 38) des Submoduls (19, 21) angeschlossen ist;
wobei ein Verbindungspunkt (29, 31) zwischen einem Leistungshalbleiterschalter (T1, T4) und einer Diode (D2, D3) jedes Brückenzweigs (24, 26) eines der Submodule (19, 21) mit jeweils einem Verbindungspunkt (39, 41) zwischen einem Leistungshalbleiterschalter (T6, T7) und einer Diode (D5, D8) eines Brückenzweigs (34, 36) des anderen Submoduls (21) direkt verbunden ist, um das Doppel-Submodul (18) zu bilden.

2. Doppel-Submodul nach Anspruch 1, wobei ein erster, negativerer Polanschluss (28) eines (19) der Submodule (19, 21) eine erste Ein-/Ausgangsklemme (42) des Doppel-Submoduls (18) bildet, während ein zweiter, positiverer Polanschluss (37) des anderen Submoduls (21) eine zweite Ein-/Ausgangsklemme (43) des Doppel-Submoduls (18) bildet.

3. Doppel-Submodul nach Anspruch 2, wobei das Doppel-Submodul (18) dazu eingerichtet ist, bei Ansteuerung der Leistungshalbleiterschalter (T1, T4, T6, T7) stets eine unipolare Ausgangsspannung (Uₐ) zu erzeugen und einen bipolaren Strom (Iₐ) zwischen der ersten und der zweiten Ein-/Ausgangsklemme (42, 43) des Doppel-Submoduls (18) zu führen.

4. Doppel-Submodul nach Anspruch 2 oder 3, wobei das Doppel-Submodul (18) dazu eingerichtet ist, bei Ansteuerung der Leistungshalbleiterschalter (T1, T4, T6, T7) eine Null-Klemmenspannung, eine Klemmenspannung (Uₐ), die der positiven Spannung (U_{C1}, U_{C2}) eines der Kondensatoren (C1, 23; C2, 33) entspricht, oder eine Spannung zu erzeugen, die der Summe (U_{C1} + U_{C2}) der positiven Spannungen der Kondensatoren (C1, 23; C2, 33) entspricht.

5. Doppel-Submodul nach einem der Ansprüche 2-4, wobei das Doppel-Submodul (18) derart eingerichtet ist, dass bei der Führung eines Stroms zwischen der ersten und der zweiten Ein-/Ausgangsklemme (42, 43) des Doppel-Submoduls (18) in jede Richtung in jedem Submodul (19, 21) maximal nur ein einziger Leistungshalbleiterschalter (T1, T4, T6, T7) stromdurchflossen ist.

6. Doppel-Submodul nach einem der Ansprüche 2-5, wobei das Doppel-Submodul (18) in manchen Schaltzuständen dazu eingerichtet ist, einen Strom zwischen der ersten und der zweiten Ein-/Ausgangsklemme (42, 43) des Doppel-Submoduls (18) durch zwei parallele Strompfade innerhalb des Doppel-Submoduls (18) zu führen, die jeweils zwei der Dioden bzw. Freilaufdioden (D1-D8) enthalten.

7. Doppel-Submodul nach einem der vorstehenden Ansprüche, wobei alle Dioden (D2, D3; D5, D8) und Freilaufdioden (D1, D4; D6, D7) in Durchlassrichtung von dem zweiten (28; 38) zu dem ersten (27; 37) Polanschluss jedes Submoduls (19, 21) ausgerichtet sind.

8. Doppel-Submodul nach einem der vorstehenden Ansprüche, wobei die Dioden (D2, D3; D5, D8) in den Brückenzweigen (24, 26; 34, 36) eines jeden Submoduls (19, 21) mit unterschiedlichen Anschlüssen des Submoduls (19, 21) direkt verbunden sind.

9. Doppel-Submodul nach einem der vorstehenden Ansprüche, wobei die Submodule (19, 21) derart miteinander elektrisch verbunden sind, dass stets eine Anode einer Diode (D5; D3) in einem Brückenzweig (34; 26) eines der Submodule (19, 21) mit einer Kathode einer Diode (D2; D8) in einem Brückenzweig (24; 36) des anderen Submoduls (19, 21) direkt verbunden sind.

10. Modularer Mehrpunktstromrichter zur Umwandlung einer Wechselspannung in eine Gleichspannung oder umgekehrt
mit wenigstens einem Phasenzweig (11a-c), der einen Wechselspannungsanschluss (17a-c) und wenigstens einen mit einem Gleichspannungszwischenkreis verbundenen Gleichspannungsanschluss (12, 13) aufweist, wobei zwischen jedem Gleichspannungsanschluss (12, 13) und jedem Wechselspannungsanschluss (17a-c) ein Stromrichterzweig (9a-f) ausgebildet ist,
wobei in jedem der Stromrichterzweige (9a-f) wenigstens ein Doppel-Submodul (18) nach einem beliebigen der vorhergehenden Ansprüche angeordnet ist.

11. Modularer Mehrpunktstromrichter nach Anspruch 10, der eine der Anzahl von Phasen entsprechende Anzahl von Phasenzweigen (11a-c), vorzugsweise zwei oder drei Phasenzweige (11a-c), einen mit einem ersten Pol des Gleichspannungszwischenkreises verbundenen ersten Gleichspannungsanschluss (12), einen mit einem zweiten Pol des Gleichspannungszwischenkreises verbundenen zweiten Gleichspannungsanschluss (13) und in allen Stromrichterzweigen (9a-f) vorzugsweise die gleiche Anzahl von Doppel-Submodulen (18), vorzugsweise jeweils zwei oder mehrere in Reihe verbundene Doppel-Submodule (18), aufweist.

12. Modularer Mehrpunktstromrichter nach Anspruch 10 oder 11, der ferner eine Steuereinrichtung (44) zur Steuerung des Betriebs des modularen Mehrpunktstromrichters (8) aufweist, wobei die Steuereinrichtung (44) dazu eingerichtet ist, die Leistungshalbleiterschalter derart anzusteuern, dass stets eine unipolare Ausgangsspannung (Uₐ) ausgegeben wird und ein bipolarer Strom zwischen Ein-/Ausgangsklemmen (42, 43) des Doppel-Submoduls (18) übertragen werden kann.

13. Modularer Mehrpunktstromrichter nach einem der Ansprüche 10-12, wobei die Steuereinrichtung (44) dazu eingerichtet ist, einen Kurzschluss in dem Gleichspannungszwischenkreis zu erkennen und daraufhin alle Leistungshalbleiterschalter (T1, T4, T6, T7) eines Doppel-Submoduls (18) auszuschalten, um einen Kurzschlussstrom über parallele Strompfade in dem Doppel-Submodul (18) zu führen, wobei jeder Strompfad zwei in Reihe verbundene Dioden (D2, D5) bzw. Freilaufdioden (D4, D7) des Doppel-Submoduls (18) aufweist.

## Claims

1. A double submodule for a modular multilevel converter, wherein the double submodule (18) comprises two interconnected submodules (19, 21), each submodule (19, 21) comprising:
an asymmetrical H-bridge circuit (22, 32) having two parallel bridge branches (24, 26; 34, 36) connected between a first and a second pole connection (27, 28; 37, 38) of the submodule (19, 21), wherein each bridge branch (24, 26; 34, 36) is formed by a series circuit of a power semiconductor switch (T1, T4; T6, T7) and a diode (D2, D3; D5, D8), wherein the power semiconductor switch (T1, T4; T6, T7) has an antiparallel-connected free-wheeling diode (D1, D4; D6, D7) assigned thereto; and
a capacitor (C1, 23; C2, 33) connected in parallel to the asymmetrical H-bridge circuit (22, 32) between the first and the second pole connections (27, 28; 37, 38) of the submodule (19, 21);
wherein a connection point (29, 31) between a power semiconductor switch (T1, T4) and a diode (D2, D3) of each bridge branch (24, 26) of one of the submodules (19, 21) is connected directly to a respective connection point (39, 41) between a power semiconductor switch (T6, T7) and a diode (D5, D8) of a bridge branch (34, 36) of the other submodule (21) to form the double submodule (18).

2. The double submodule according to claim 1, wherein a first, more negative pole connection (28) of one (19) of the submodules (19, 21) forms a first input/output terminal (42) of the double submodule (18), while a second, more positive pole connection (37) of the other submodule (21) forms a second input/output terminal (43) of the double submodule (18).

3. The double submodule according to claim 2, wherein, the double submodule (18) is configured to always generate a unipolar output voltage (Uₐ) and conduct a bipolar current (Iₐ) between the first and the second input/output terminals (42, 43) of the double submodule (18), when the power semiconductor switches (T1, T4, T6, T7) are controlled.

4. The double submodule according to claim 2 or 3, wherein the double submodule (18) is configured to generate a zero terminal voltage, a terminal voltage (Uₐ) that corresponds to the positive voltage (U_{C1}, U_{C2}) of one of the capacitors (C1, 23; C2, 33) or a voltage that corresponds to the sum (U_{C1}+U_{C2}) of the positive voltages of the capacitors (C1, 23; C2, 33), when the power semiconductor switches (T1, T4, T6, T7) are controlled.

5. The double submodule according to anyone of the claims 2-4, wherein the double submodule (18) is configured in such a way that, when a current is conducted between the first and the second input/output terminals (42, 43) of the double submodule (18), a maximum of only one power semiconductor switch (T1, T4, T6, T7) has a current flowing through it in each direction in each submodule (19, 21).

6. The double submodule according to anyone of the claims 2-5, wherein the double submodule (18) is configured in some switching states to conduct a current between the first and the second input/output terminals (42, 43) of the double submodule (18) through two parallel current paths within the double submodule (18), each of which includes two of the diodes or free-wheeling diodes (D1-D8).

7. The double submodule according to anyone of the preceding claims, wherein all diodes (D2, D3; D5, D8) and free-wheeling diodes (D1, D4; D6, D7) are oriented in the forward direction from the second (28; 38) to the first (27, 37) pole connection of each submodule (19, 21).

8. The double submodule according to anyone of the preceding claims, wherein the diodes (D2, D3; D5, D8) in the bridge branches (24, 26; 34, 36) of each submodule (19, 21) are directly connected to different connections of the submodule (19, 21).

9. The double submodule according to anyone of the preceding claims, wherein the submodules (19, 21) are electrically connected to one another in such a way that an anode of a diode (D5; D3) in a bridge branch (34; 26) of one of the submodules (19, 21) is always connected directly to a cathode of a diode (D2; D8) in a bridge branch (24, 36) of the other submodule (19, 21).

10. A modular multilevel converter for converting an AC voltage into a DC voltage, or vice versa, comprising
at least one phase leg (17a-c) which includes an AC voltage connection (17a-c) and at least one DC voltage connection (12, 13) connected to a DC voltage intermediate circuit, wherein a converter branch (9a-f) is formed between each DC voltage connection (12, 13) and each AC voltage connection (17a-c),
wherein at least one double submodule (18) according to anyone of the preceding claims is arranged in each of the converter branches (9a-f).

11. The modular multilevel converter according to claim 10, comprising a number of phase legs (11a-c) corresponding to the number of phases, preferably two or three phase legs (11a-c), a first DC voltage connection (12) connected to a first pole of the DC voltage intermediate circuit, a second DC voltage connection (13) connected to a second pole of the DC voltage intermediate circuit, and preferably the same number of double submodules (18), preferably two or more double submodules (18) connected in series, in all converter branches (9a-f).

12. The modular multilevel converter according to claim 10 or 11, further comprising a control device (44) for controlling the operation of the modular multilevel converter (8), wherein the control device (44) is configured to control the power semiconductor switches in such a way that a unipolar output voltage (Uₐ) is always output and a bipolar current can always be transmitted between the input/output terminals (42, 43) of the double submodule (18).

13. The modular multilevel converter according to anyone of the claims 10-12, wherein the control device (44) is configured to detect a short circuit in the DC voltage intermediate circuit and then switch off all power semiconductor switches (T1, T4, T6, T7) of a double submodule (18) in order to conduct a short-circuit current via parallel current paths in the double submodule (18), wherein each current path has two series-connected diodes (D2, D5) or free-wheeling diodes (D4, D7) of the double submodule (18).

## Revendications

1. Sous-module double pour un convertisseur multipoints modulaire, selon lequel le sous-module double (18) présente deux sous-modules (19, 21) connectés l'un à l'autre, selon lequel chaque sous-module (19, 21) présente :
un circuit en pont en H asymétrique (22 ; 32) avec deux branches de pont parallèles (24, 26 ; 34, 36), qui sont raccordées entre un premier et un second raccord polaire (27, 28 ; 37, 38) du sous-module (19, 21), selon lequel chaque branche de pont (24, 26 ; 34, 36) est formée, au travers d'un circuit en série, d'un interrupteur à semi-conducteurs de puissance (T1, T4 ; T6, T7) et d'une diode (D2, D3 ; D5, D8), selon lequel une diode de roue libre (D1, D4 ; D6, D7) montée de manière antiparallèle est associée à l'interrupteur à semi-conducteurs de puissance (T1, T4 ; T6, T7) ; et
un condensateur (C1, 23 ; C2, 33) qui est raccordé en parallèle avec le circuit en pont en H asymétrique (22 ; 32), entre le premier et le second raccord polaire (27, 28 ; 37, 38) du sous-module (19, 21) ;
selon lequel un point de connexion (29, 31) entre un interrupteur à semi-conducteurs de puissance (T1, T4) et une diode (D2, D3) de chaque branche de pont (24, 26) d'un des sous-modules (19, 21) est directement connecté à, respectivement, un point de connexion (39, 41) entre un interrupteur à semi-conducteurs de puissance (T6, T7) et une diode (D5, D8) d'une branche de pont (34, 36) de l'autre sous-module (21) pour former le sous-module double (18).

2. Sous-module double selon la revendication 1, selon lequel un premier raccord polaire négatif (28) d'un (19) des sous-modules (19, 21) forme une première borne d'entrée/sortie (42) du sous-module double (18), tandis qu'un second raccord polaire positif (37) de l'autre sous-module (21) forme une seconde borne d'entrée/sortie (43) du sous-module double (18).

3. Sous-module double selon la revendication 2, selon lequel le sous-module double (18) est configuré, lors de la commande de l'interrupteur à semi-conducteurs de puissance (T1, T4, T6, T7), pour produire en permanence une tension de sortie unipolaire (Uₐ) et conduire un courant bipolaire (Iₐ) entre la première et la seconde borne d'entrée/sortie (42, 43) du sous-module double (18).

4. Sous-module double selon la revendication 2 ou 3, selon lequel le sous-module double (18) est configuré, lors de la commande de l'interrupteur à semi-conducteurs de puissance (T1, T4, T6, T7), pour produire une tension aux bornes nulle, une tension aux bornes (Uₐ), qui correspond à la tension positive (U_{c1}, U_{c2}) d'un des condensateurs (C1, 23 ; C2, 33), ou une tension qui correspond à la somme (U_{c1} + U_{c2}) des tensions positives des condensateurs (C1, 23 ; C2, 33).

5. Sous-module double selon l'une quelconque des revendications 2-4, selon lequel le sous-module double (18) est configuré de telle façon que, lors de l'acheminement d'un courant entre la première et la seconde borne d'entrée/sortie (42, 43) du sous-module double (18), dans chaque direction, dans chaque sous-module (19, 21), au maximum un seul interrupteur à semi-conducteurs de puissance (T1, T4, T6, T7) est parcouru par un courant.

6. Sous-module double selon l'une quelconque des revendications 2-5, selon lequel le sous-module double (18), dans plus d'un état de commutation, est configuré pour conduire un courant entre la première et la seconde borne d'entrée/sortie (42, 43) du sous-module double (18) à travers deux trajets de courant parallèles à l'intérieur du sous-module double (18), qui contiennent respectivement deux des diodes ou diodes de roue libre (D1-D8).

7. Sous-module double selon l'une quelconque des revendications précédentes, selon lequel toutes les diodes (D2, D3; D5, D8) et diodes de roule libre (D1, D4 ; D6, D7) sont orientées dans la direction passant de la seconde (28 ; 38) au premier (27 ; 37) raccord polaire de chaque sous-module (19, 21).

8. Sous-module double selon l'une quelconque des revendications précédentes, selon lequel les diodes (D2, D3 ; D5, D8) sont directement connectées, dans les branches de pont (24, 26 ; 34, 36) de chaque sous-module (19, 21), à différents raccords du sous-module (19, 21).

9. Sous-module double selon l'une quelconque des revendications précédentes, selon lequel les sous-modules (19, 21) sont électriquement connectés l'un à l'autre de telle manière qu'une anode d'une diode (D5 ; D3) dans une branche de pont (34 ; 26) d'un des sous-modules (19, 21) soit directement connectée en permanence à une cathode d'une diode (D2 ; D8) dans une branche de pont (24 ; 36) de l'autre sous-module (19, 21).

10. Convertisseur multipoints modulaire pour convertir une tension alternative en une tension continue ou inversement
avec au moins une branche de phase (11a-c) qui présente un raccord de tension alternative (17a-c) et au moins un raccord de tension continue (12, 13) connecté à un circuit intermédiaire à tension continue, selon lequel une branche de convertisseur (9a-f) est agencée entre chaque raccord de tension continue (12, 13) et chaque raccord de tension alternative (17a-c),
selon lequel dans chacune des branches de convertisseur (9a-f), au moins un sous-module double (18) est disposé selon l'une quelconque des revendications précédentes.

11. Convertisseur multipoints modulaire selon la revendication 10, qui présente un nombre de branches de phase (11a-c) correspondant au nombre de phases, de préférence deux ou trois branches de phase (11a-c), un premier raccord de tension continue (12) connecté à un premier pôle du circuit intermédiaire à tension continue, un second raccord de tension continue (13) connecté à un second pôle du circuit intermédiaire à tension continue et, dans toutes les branches de convertisseur (9a-f), de préférence le même nombre de sous-modules doubles (18), de préférence respectivement deux ou plusieurs sous-modules doubles (18) connectés en série.

12. Convertisseur multipoints modulaire selon la revendication 10 ou 11, qui présente en outre un appareil de commande (44) pour commander le fonctionnement du convertisseur multipoints modulaire (8), selon lequel l'appareil de commande (44) est configuré pour commander les interrupteurs à semi-conducteurs de puissance de telle façon qu'en permanence, une tension de sortie unipolaire (Uₐ) soit délivrée et un courant bipolaire puisse être transféré entre des bornes d'entrée/sortie (42, 43) du sous-module double (18).

13. Convertisseur multipoints modulaire selon l'une quelconque des revendications 10-12, selon lequel l'appareil de commande (44) est configuré pour reconnaître un court-circuit dans le circuit intermédiaire à tension continue et après cela, pour couper tous les interrupteurs à semi-conducteurs de puissance (T1, T4, T6, T7) d'un sous-module double (18), afin de conduire un courant de court-circuit à travers des trajets de courant parallèles dans le sous-module double (18), selon lequel chaque trajet de courant présente deux diodes (D2, D5) ou diodes de roue libre (D4, D7) du sous-module double (18) connectées en série.
